# EUROPEAN PATENT SPECIFICATION

(11) **EP 1 602 809 B1**
(45) Date of publication and mention of the grant of the patent: **13.06.2012**
(21) Application number: 04716007.2
(22) Date of filing: 01.03.2004
(51) Int. Cl.: F01P 7/16

(54) **MOUNTING STRUCTURE OF THERMOSTAT**
BEFESTIGUNGSKONSTRUKTION FÜR THERMOSTAT
STRUCTURE DE FIXATION DE THERMOSTAT

(30) Priority: 11.03.2003 JP 2003065548
(43) Date of publication of application: 07.12.2005
(73) Proprietor: HONDA MOTOR CO., LTD., Tokyo 107-8556 (JP); NIPPON THERMOSTAT CO., LTD., Kiyose-city Tokyo 204-0003 (JP)
(72) Inventor: MORIYAMA, Ryuji Kabushiki Kaisha Honda, Wako-shi,Saitama 351-0193 (JP); OKI, Kenji Kabushiki Kaisha Honda, Wako-shi,Saitama 351-0193 (JP); KOBAYASHI, Koji Kabushiki Kaisha Honda, Wako-shi,Saitama 351-0193 (JP); YOGO, Toyoyuki Kabushiki Kaisha Honda, Wako-shi,Saitama 351-0193 (JP); YAJIMA, Noriyasu;, Kiyose-city Tokyo 204-0003 (JP)
(74) Representative: Prechtel, Jörg
(86) International application number: PCT/JP2004/002483
(87) International publication number: WO 2004/081354

(56) References cited:
- EP-A- 1 067 280
- EP-A- 1 219 879
- JP-A- 2000 213 353
- JP-A- 2002 038 950
- JP-A- 2002 039 433
- JP-U- 03 019 428
- US-A- 5 018 664
- US-A- 5 799 625

## Description

### TECHNICAL FIELD

The present invention relates to a thermostat mounting structure for holding a thermostat that controls the flow of a coolant in a cooling system included in an internal combustion engine.

### BACKGROUND ART

A buried thermostat mounting structure previously proposed in, for example, JP 2002-39433 A fits an encased thermostat in a thermostat chamber extending across a coolant passage in a casing, and covers the thermostat chamber with a cover so as to hold the thermostat in place, and seals the gap between the cover and the casing with a rubber seal.

A thermostat mounting structure in a second embodiment of the invention disclosed in JP 2002-39433 A will be described with reference to Fig. 17.

A thermostat chamber 03 is extended across a coolant passage 02 formed in a casing 01. A thermostat 07 is fitted in the thermostat chamber 03. A cover 05 is attached to the casing 04 so as to cover the thermostat chamber 03 and to hold the thermostat 07 in place. The gap between the cover 05 and the casing 01 is sealed with a rubber seal 04.

The thermostat 07 has a cylindrical valve body 08 provided with an inlet opening 08a and an outlet opening 08b, and a valve element 09. The valve element 09 moves axially to open and close the inlet opening 08a and the outlet opening 08b. The valve body 08 is fitted in the thermostat chamber 03 with the openings 08a and 08b corresponding to the coolant passage 02 of the casing 01.

A bypass opening 08c is formed in the valve body 08 at a position below the outlet opening 08b so as to connect a space in the valve body 08 to the coolant passage 02. The outlet opening 08b and the bypass opening 08c are opened selectively by the agency of the thermal expansion of a wax 010. An O-ring 011 is put on the thermostat 07 to divide the outer surface of the valve body 08 into a part on the side of the inlet opening 08a and a part on the side of the outlet opening 08b.

The cover 05 is provided with a bypass passage 06 and an annular groove holding the rubber seal 04. The cover 05 is attached to the casing 01 so as to cover the thermostat chamber 03 holding the thermostat 07. The rubber seal 04 is pressed against a part of the casing 01 around the thermostat chamber 03 and the outer end of the valve body 08 to fix the thermostat 07 in the thermostat chamber 03.

Thus, the O-ring 011 divides the thermostat chamber 03 formed in the casing 01 and surrounding the valve body 08 into a part on the side of the inlet opening and a part on the side of the outlet opening. The rubber seal 04 separates an internal space inside the valve body 08 fitted in the thermostat chamber 03 from an external space outside the valve body 08.

Although the prior art thermostat mounting structure is advantageous in forming a thermostat unit in compact construction, the thermostat 07 fitted in the thermostat chamber 03 is displaced minutely because the thermostat 07 is suspended by the O ring 011 in a floating state, and the thermostat mounting structure does not have any positioning mechanism for positioning the thermostat 07 relative to the casing 01 and the rubber seal 04.

US-A-5 018 664 discloses a thermostat mounting structure, wherein a thermostat chamber is provided in a casing so as to extend across an inlet coolant passage formed through the casing; a thermostat is fitted in the thermostat chamber of the casing, said thermostat having a valve element slidably fitted in a valve body; a cover is attached to the casing so as to close the thermostat chamber; and an annular elastic seal is provided to seal the thermostat chamber and to hold the thermostat fixedly in place in the thermostat chamber, wherein the elastic seal has a corner part defined by an annular lip and an annular ridge

Further, EP 1 219 879 A1 discloses a thermostat mounting structure having a thermostat chamber, a thermostat and a cover closing the thermostat chamber, wherein an elastic seal is fitted in an annular groove of the cover to seal the thermostat chamber.

For further illustration of background art, reference can also be made to documents EP 1 067 280 A1 and US-A-5 799 625, which disclose thermostat mounting structures for mounting a thermostat in a flow passage of an internal combustion engine.

The present invention has been made in view of such a problem and it is therefore an object of the present invention to provide a thermostat mounting structure capable of accurately positioning and securely sealing a thermostat in a thermostat chamber, and simple in construction.

### DISCLOSURE OF THE INVENTION

To achieve the above object, the present invention provides a thermostat mounting structure according to claim 1.

The cover is attached to the casing so as to cover the thermostat chamber with the annular inner corner part of the annular elastic seal fitted in the annular groove of the cover pressed against the outer end of the valve body. Thus, the thermostat can be held fixedly in place by the simple thermostat mounting structure, the valve body is restrained from displacement, and the annular elastic seal is pressed against the end surface and the circumference of the outer end of the valve body to seal the thermostat chamber with high reliability.

According to an embodiment of the present invention, the elastic seal may be provided with an annular shoulder having an L-shaped cross section in the inner corner part defined by the annular lip and the annular ridge, and the annular circumferential end portion of the outer end of the valve body may be fitted against the annular shoulder to position the thermostat.

Since the annular elastic seal is provided with the annular shoulder having an L-shaped cross section in the inner corner part and the cover is attached to the casing to cover the thermostat chamber of the casing with the end surface and the outer circumference of the outer end of the valve body of the thermostat fitted in the thermostat chamber of the casing fitted in the annular groove to position the thermostat, the thermostat can be easily and surely positioned, the valve body can be restrained from displacement, and the elastic seal is pressed against the end surface and the outer circumference of the outer end of the valve body to securely seal the thermostat chamber.

In another embodiment of the thermostat mounting structure according to the present invention, the annular ridge defining the annular shoulder of the elastic seal may have an inclined inner side surface, and the outer edge of the end surface of the valve body in contact with the inclined inner side surface of the annular ridge may be chambered in a bevel surface.

The inclined inner side surface of the annular ridge of the elastic seal and the beveled surface of the valve body are able to be pressed closely together and thereby the thermostat can be firmly held for positioning and the sealing effect of the elastic seal can be increased.

According to the invention, the circular lip of the elastic seal extends radially inward from a body of the elastic seal, and the annular ridge rises toward the thermostat from the inner surface of the body of the elastic seal facing the thermostat.

Preferably, an axial groove is formed in the side wall of the thermostat chamber, an axial ridge is formed on the outer circumference of the valve body, and the thermostat is fitted in the thermostat chamber with the axial ridge fitted in the axial groove to position the valve body with respect to a circumferential direction.

Preferably, the thermostat chamber of the casing has an outer open end covered with the cover and a substantially semispherical inner bottom, and the cylindrical valve body has an inner, bottomed cylindrical part having an end seated on the semispherical inner bottom of the thermostat chamber.

The inner, bottomed cylindrical part may have an outside diameter smaller than that of the valve body, ribs may be formed integrally with the inner, bottomed cylindrical end part so as to extend in diametrically opposite directions, respectively, and the ribs may be pressed against the substantially semispherical bottom. This arrangement enables the further accurate positioning of the cylindrical valve body in the thermostat chamber.

### BRIEF DESCRIPTION OF THE DRAWINGS

Fig. 1 is a sectional view of a thermostat mounting structure in a preferred embodiment of the present invention as applied to a cooling system included in an internal combustion engine, and part of the internal combustion engine;
Fig. 2 is a side elevation of a pump case;
Fig. 3 is a sectional view taken on the line III-III in Fig. 2;
Fig. 4 is a sectional view taken on the line IV-IV in Fig. 2;
Fig. 5 is a front elevation of a thermostat cover;
Fig. 6 is a rear view of the thermostat cover;
Fig. 7 is a sectional view taken on the line VII-VII in Fig. 6;
Fig. 8 is a plan view of a rubber seal;
Fig. 9 is a sectional view taken on the line IX-IX in Fig. 8;
Fig. 10 is a front elevation of a thermostat;
Fig. 11 is a side elevation of the thermostat shown in Fig. 10;
Fig. 12 is a top view of the thermostat shown in Fig. 10;
Fig. 13 is a bottom view of the thermostat shown in Fig. 10;
Fig. 14 is a sectional view taken on the line XIV-XIV in Fig. 11;
Fig. 15 is an enlarged sectional view of the thermostat mounting structure in a state where the temperature of the coolant is low;
Fig. 16 is an enlarged sectional view of the thermostat mounting structure in a state where the temperature of the coolant is high; and

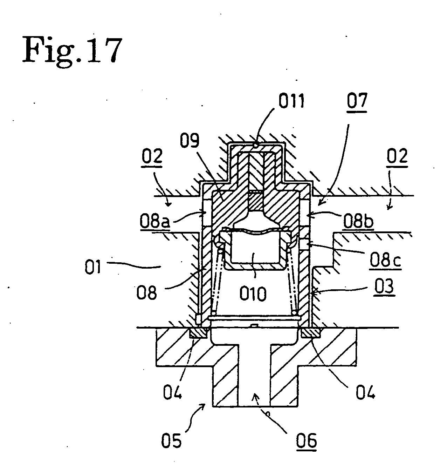

Fig. 17 is a sectional view of a prior art thermostat mounting structure.

### BEST MODE FOR CARRYING OUT THE INVENTION

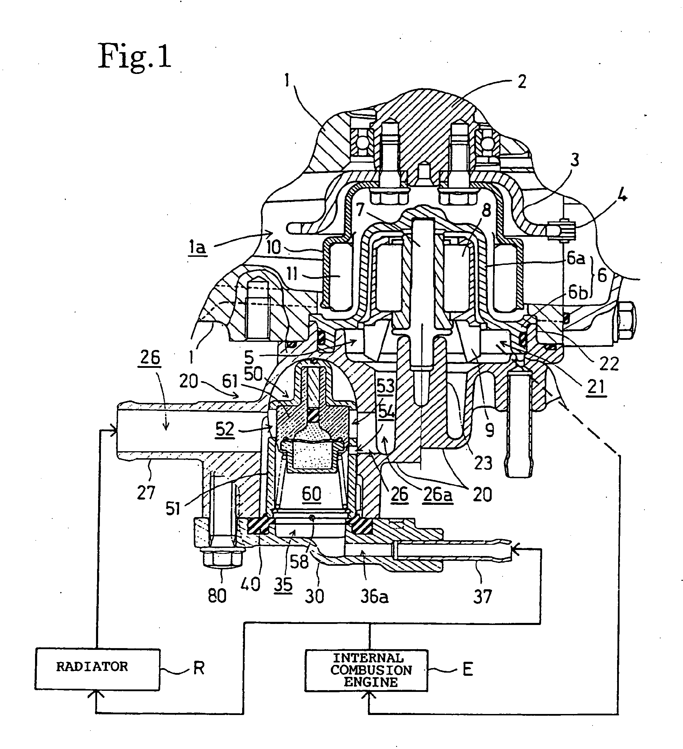

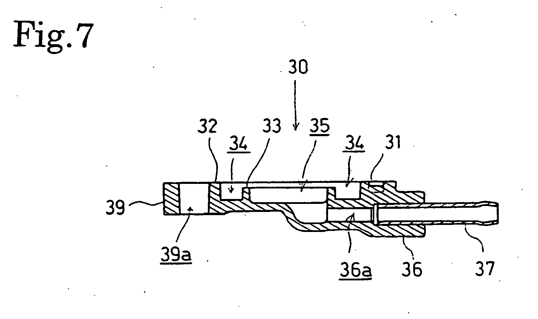

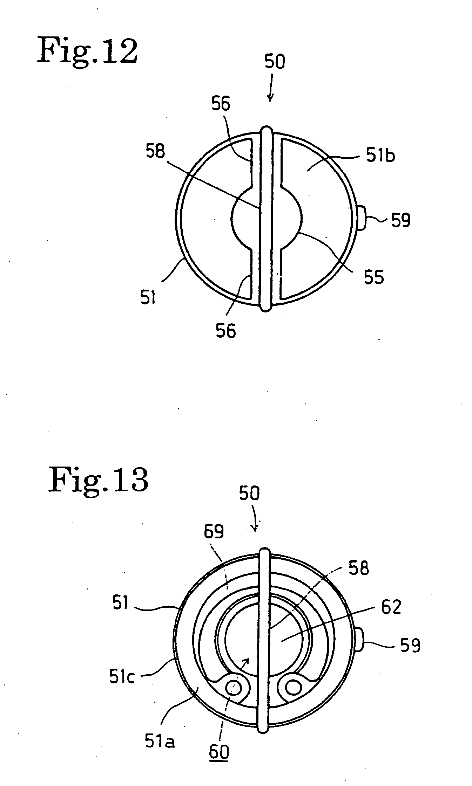

A thermostat mounting structure in a preferred embodiment of the present invention will be described with reference to Figs. 1 to 16. The thermostat mounting structure holds a thermostat 50 included in the cooling system of an internal combustion engine.

Referring to Fig. 1, a camshaft 2 is supported for rotation on a cylinder head 1. A timing chain 4 is extended between a driven sprocket 3 fixedly mounted on one end of the cam shaft 2 and a drive sprocket mounted on a crankshaft, not shown, to drive the camshaft 2 for rotation at a rotational speed half that of the crankshaft.

The timing chain 4 is extended in a chain chamber 1a formed in the cylinder head 1. An opening is formed coaxially with the camshaft 2 in a side wall 1a defining the chain chamber 1a. A water pump 5 has a pump case 6 fitted in the opening of the side wall.

The pump case 6 of the water pump 5 has a bottomed cylindrical part 6a housing a driven magnet 8 supported on a rotational shaft 7, and an enlarged part 6b put on the rotational shaft 7 and housing an impeller 9. The rotational shaft 7 has one end rotatably supported on a thermostat casing 20 serving also as a pump cover. The driven magnet 8 and the impeller 9 rotate together with the rotational shaft 7.

A drive magnet 11 is fitted in a cylindrical support member 10 fastened together with the driven sprocket 3 to the camshaft 2 so as to surround the pump case 6 fitted in the chain chamber 1a of the cylinder head 1. The drive magnet 11 that rotates together with the camshaft 2 entrains the driven magnet 8 of the water ump 5 separated therefrom by the pump case 6 to rotate the impeller 9.

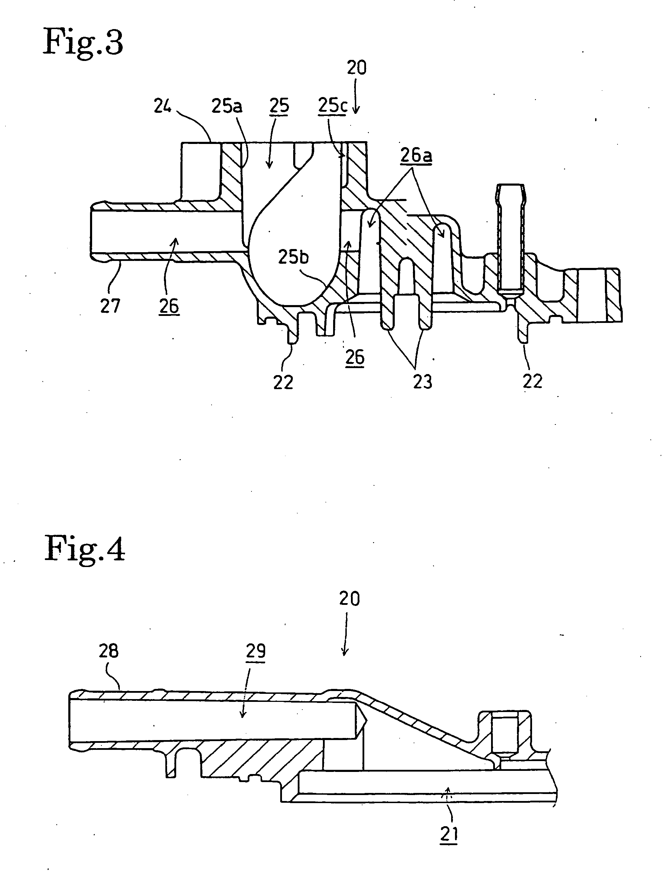

The thermostat casing 20 serving also as a pump cover has an inner annular wall 22. The annular wall 22 is fitted in the enlarged part 6b of the pump case 6 to form a scroll chamber 21 in which the impeller 9 rotates. A journal 23 of the rotational shaft 7 extends into the thermostat casing 20 as shown in Figs. 1 and 3.

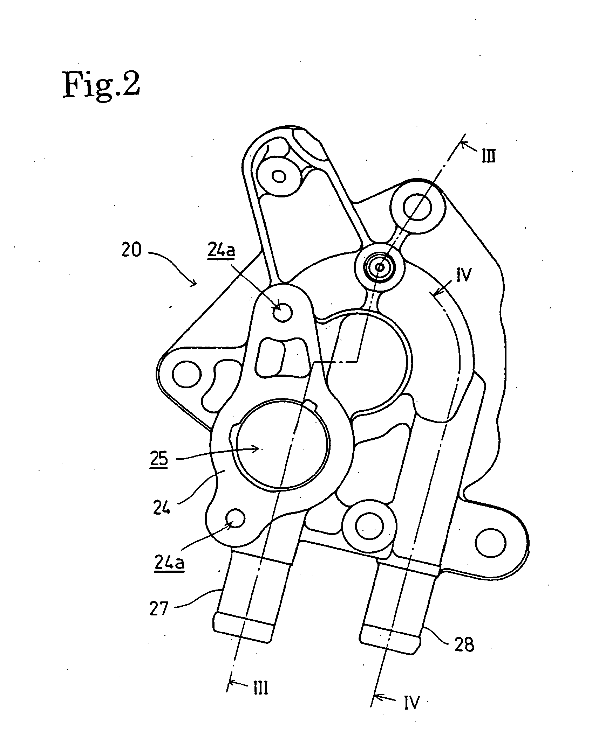

Referring to Figs. 2 to 4, the thermostat casing 20 serving also as a thermostat casing has an outer joining surface 24 to which a thermostat cover 30 is joined. A thermostat chamber 25, i.e., a thermostat receiving chamber, is formed in the thermostat casing 20 so as to open in the outer contact surface 24. A thermostat 50 is fitted in the thermostat chamber 25. Threaded holes 24a are formed in the outer joining surface 24 at positions substantially on the opposite sides, respectively, of the thermostat chamber 25.

The thermostat chamber 25 is defined by a tapered circumferential surface 25a slightly tapered toward its inner end, and a substantially semispherical bottom surface 25b. A groove 25c of a predetermined length is formed in the tapered circumferential surface 25a so as to extend from the open end of the tapered side surface 25a.

An inlet coolant passage 26 is formed so as to extend perpendicularly to the thermostat chamber 25 and to open in an inner end part of the thermostat chamber 25. An upstream part of the inlet coolant passage 26 extends in an inlet connecting pipe 27, while a downstream part of the inlet coolant passage 26 is connected to an annular inlet passage 26a. The thermostat chamber 25 extends across the inlet coolant passage 26.

An outlet coolant passage 29 is formed in an outlet connecting pipe 28 parallel to the inlet connecting pipe 27 as shown in Fig. 4. The inlet coolant passage 29 is connected to the scroll chamber 21 surrounding the impeller 9.

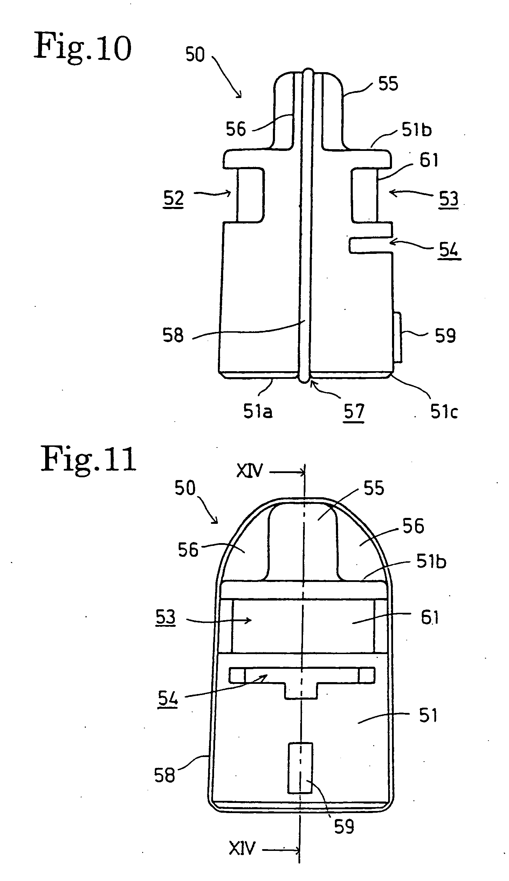

Referring to Figs. 10 to 14, the thermostat 50 received in the thermostat chamber 25 of the thermostat casing 20 has a slightly tapered, cylindrical valve body 51. The valve body 51 is provided with a rectangular inlet opening 52 and a rectangular outlet opening 53 in substantially diametrically opposite parts thereof, and a bypass opening 54 in a part below the outlet opening 53.

The valve body 51 has an outer open end having an annular end surface 51a, and an inner end defined by a bottom wall 51b. A reduced bottomed cylindrical part 55 protrudes from the bottom wall 51b. The outer edge of the annular end surface 51a is chamfered in a bevel surface 51c.

Ribs 56 are extended along the bottomed cylindrical part 55 to the bottom wall 51b. Inner end parts of the ribs 56 are rounded in a shape corresponding to the substantially semispherical bottom surface 25b so as to merge into the circumference of the valve body 51.

The bottomed cylindrical part 55 and the ribs 56 are formed integrally with the valve body 51. The ribs 56 are formed in parts between the inlet opening 52 and the outlet opening 53 of the valve body 51 so as to be contained in a plane including the center axis of the valve body 51.

A groove 57 is formed along the intersection of the plane including the center axis of the valve body 51 and containing the ridges of the ribs 56, and the end surfaces of the ribs 56, the end surface of the bottomed cylindrical part 55, the outer circumference of the valve body 51 and the annular end surface 51a. A rubber O ring 58 is fitted in the groove 57. A jutting part of the O ring 58 jutting out from the groove 57 divides a space around the outer circumference of the valve body 51 into halves, i.e., an inlet part on the side of the inlet opening 52, and an outlet part on the side of the outlet opening 53.

A ridge 59 is formed on the outer circumference of the valve body 51 at a position below the bypass opening 54 and near the annular end surface 51a.

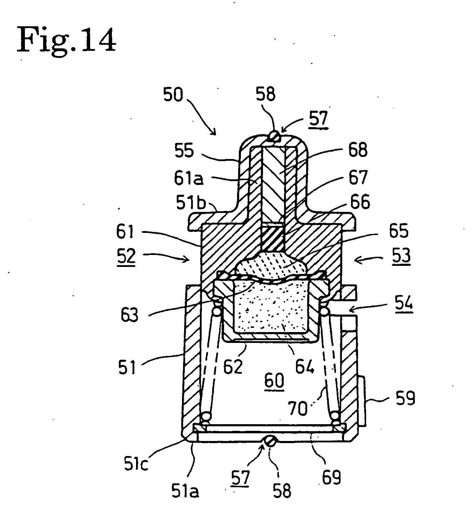

As best shown in Fig. 14, a valve element 61 is fitted slidably in a cylindrical space 60 in the valve body 51 with an inner, reduced tubular part 61a thereof slidably fitted in the bottomed cylindrical part 55. An outer part of the valve element 61 opposite the tubular part 61a is hollowed to form a space communicating with the space in the tubular part 61a.

A diaphragm 63 is held between a step formed in the space in the outer part of the valve element 61 and a bottomed wax case 62. An edge part of the open inner end of the wax case 62 fastened to the valve body 61 by staking or the like. The wax case 62 contains a wax, i.e., a thermally expandable substance. An inner part of the space in the space in the valve body 61 on the inner side of the diaphragm 63 contains a semifluid substance 65.

A rubber piston 66 and a piston 68 are fitted slidably in the reduced tubular part 61a with a backup plate 67 held between the rubber piston 66 and the piston 68.

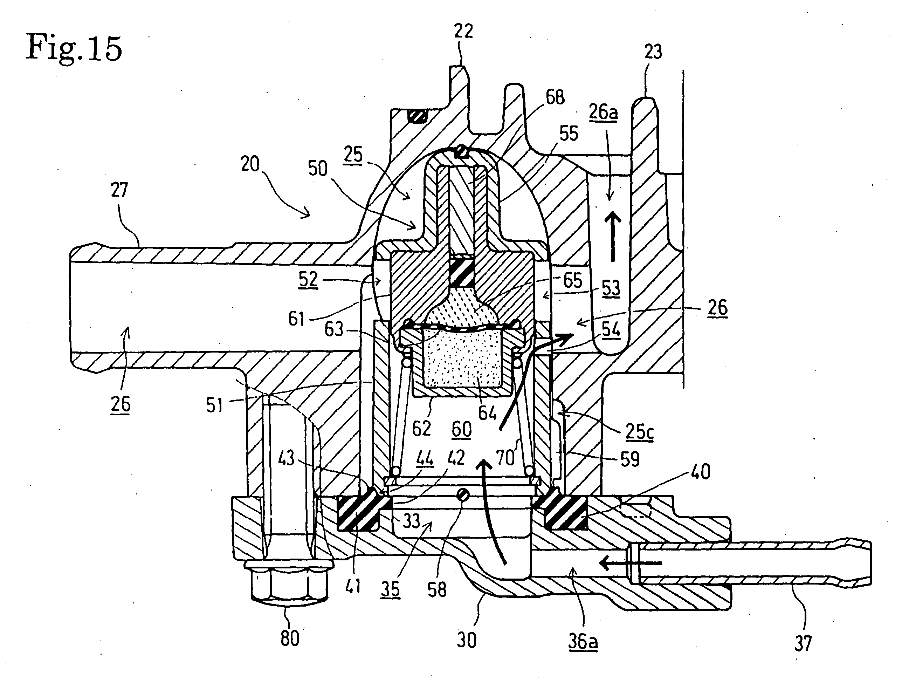

A retaining ring 69 is fitted in an annular groove formed in a part near the end surface 51a of the inner side surface of the valve body 51. A spring 70 is extended between the retaining ring 69 and the valve element 61 to press the valve element 61 against the bottom wall 51b of the valve body 51. While the coolant temperature is low, the valve element 61 is pressed against the bottom wall 51b by the spring 70 as shown in Figs. 14 and 15, and, consequently, the inlet opening 52 and the outlet opening 53 are closed and the bypass opening 54 is opened.

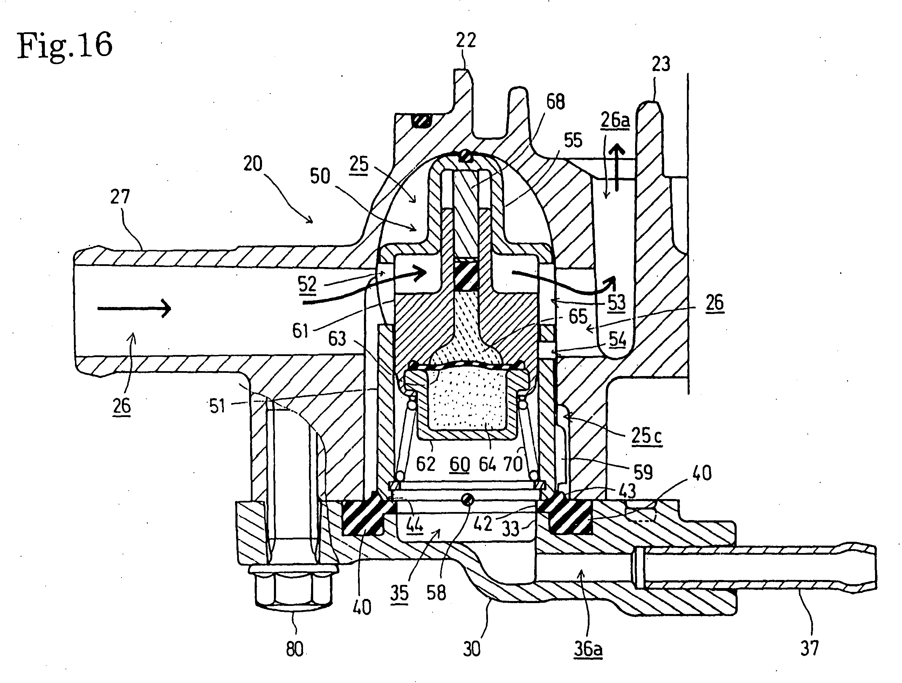

As the coolant temperature rises, the wax 64 expands to make the diaphragm 63 bulge inward, the rubber piston 66 is pushed inward, and the pressure applied to the rubber piston 66 is transmitted through the backup plate 67 to the piston 68. Since the inner end of the piston 68 is in contact with the bottom surface of the bottomed cylindrical part 55 and the piston 68 is immovable, the valve element 61 is moved outward against the resilience of the spring 70 by reaction. Consequently, the inlet opening 52 and the outlet opening 53 are opened, and the bypass opening 54 is closed as shown in Fig. 16.

The thermostat 50 is fitted in the thermostat chamber 25 of the thermostat casing 20 with the ridge 59 formed in the outer circumference of the valve body 51 fitted in the groove 25c formed in the inner circumference of the thermostat chamber 25. Thus, the thermostat 50 can be positioned at a desired angular position with respect to the axis of the valve body 51 such that the inlet passage 52 and the outlet passage 53 correspond to the inlet coolant passage 26, and the bypass opening 54, similarly to the outlet passage 53, corresponds to the inlet coolant passage 26.

The O ring 58 fitted in the groove 57 is pressed against the inner circumference 25a and the semispherical surface 25b of the thermostat chamber 25, and divides a space between the inner circumference 25a and the valve body 51 into halves, i.e., the inlet part on the side of the inlet opening 52, and the outlet part on the side of the outlet opening 53, in cooperation with the ribs 56 of the thermostat 50.

The thermostat cover 30 covers the open end of the thermostat chamber 25 after fitting the thermostat 50 in the thermostat chamber 25.

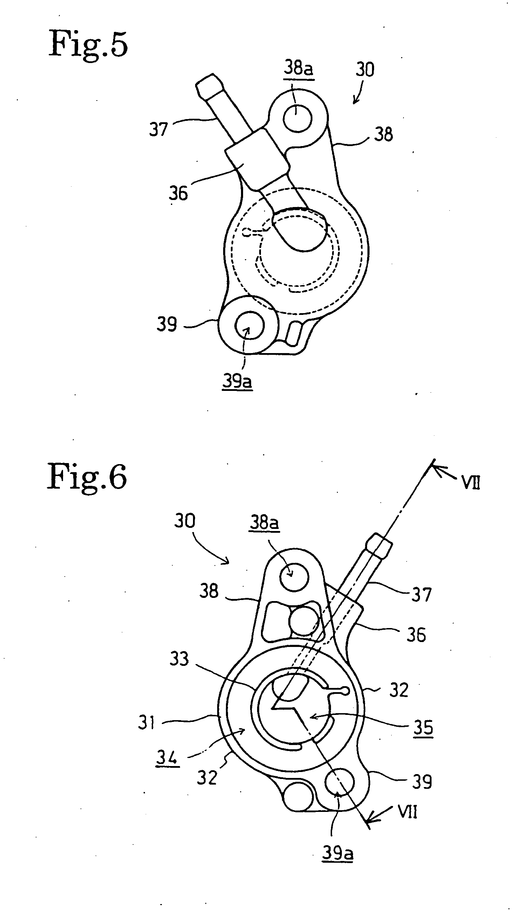

Referring to Figs. 5 to 7, the thermostat cover 30 has a joining surface 31 to be joined to the joining surface 24 of the thermostat casing 20. An outer annular wall 32 and an inner annular wall 33 lower than and coaxial with the outer annular wall 32 are formed on the joining surface 31. The inner annular wall 33 surrounds a recess 35. A by pass duct 36 has a bypass passage 36a extending from the recess 35. A connecting pipe 37 is press-fitted in the bypass duct 36.

The joining surface 31 includes the end surface of the outer annular wall 32, and the respective end surfaces of mounting parts 38 and 39 merging into the outer annular wall 32. The mounting parts 38 and 29 are provided with bolt holes 38a and 39a. An annular rubber seal 40, i.e. , an elastic seal, is fitted in an annular groove 34 formed between the outer annular wall 32 and the inner annular wall 33.

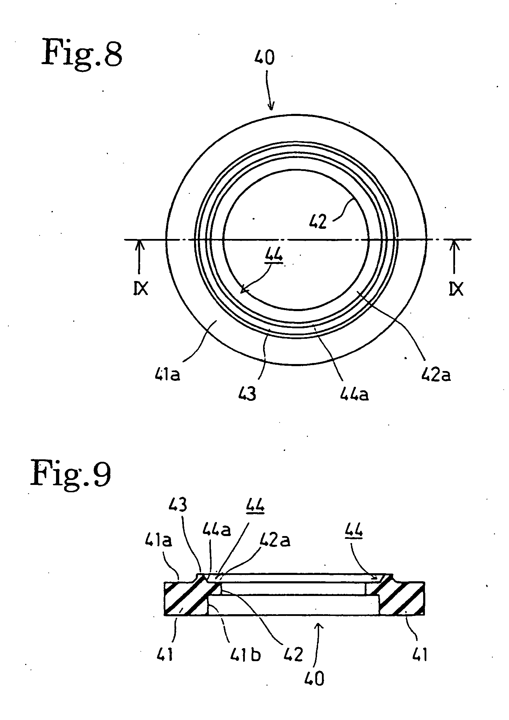

Referring to Figs. 8 and 9, the rubber seal 40 has an annular body 41 having a rectangular cross section, an annular lip 42 radially inwardly protruding from the joint of the inner sealing surface 41a and the inner circumference 41b of the annular body 41, and an annular ridge 43 axially protruding away from the inner sealing surface 41a of the annular body 41. The sealing surface 42a of the circular lip 42, and an inner inclined surface 44a of the annular ridge 43 define an annular shoulder 44 having an L-shaped corner. The rubber seal 40 is fitted in the annular groove 34 of the thermostat cover 30. The circular lip 42 of the rubber seal 40 rests on the end surface of the inner annular wall 33.

The joining surface 31 of the thermostat cover 30 provided with the rubber seal 40 is joined to the joining surface 24 of the thermostat casing 20, the inner sealing surface 41a of the rubber seal 40 is joined to the joining surface 24 surrounding the open end of the thermostat chamber 25, the annular lip 42 of the rubber seal 40 is joined to the outer end surface 21a of the valve body 21 of the thermostat 50, and the outer inclined surface 44a of the rubber seal 40 is joined to the bevel surface 51c of the valve body 21.

When the thermostat cover 30 is joined to the thermostat casing 20 so as to cover the thermostat chamber 25 containing the thermostat 50, the rubber seal 40 is pressed against the joining surface 24 around the open end of the thermostat chamber 25, and the end surface 21a of the valve body 21 of the thermostat 50 to seal the cylindrical space 60 of the valve body 21 from the external space.

When the thermostat cover 30 is thus attached to the thermostat casing 20, the inclined surface 44a defining the side surface of the annular shoulder 44 of the rubber seal 40 comes into contact with the bevel surface 51c of the open outer end of the valve body 21 to position the valve body 21 easily. The inclined surface 44a of the rubber seal 40 is pressed against the bevel surface 51c of the outer open end of the valve body 21, the valve body 21 can be accurately and surely positioned, the valve body 21 is restrained from displacement, and the valve body 21 can be satisfactorily sealed.

When the rubber seal 40 is thus compressed between the bottom surface of the annular groove 34 (and the end surface of the inner annular wall 33), and the thermostat casing 20 (and the valve body 41), the sealing surface 41a of the annular body 41, the inclined surface 44a, and the sealing surface 42a of the circular lip 42 are pressed against the joining surface 24 of the thermostat casing 20, the bevel surface 51c of the open end of the valve body 21, and the annular end surface 51a of the valve body 21, respectively, to seal the thermostat 50 perfectly in the thermostat chamber 25.

The thermostat cover 30 is fastened to the thermostat casing 20 by passing two bolts 80 through the bolt holes 38a and 39a of the thermostat cover 30 and screwing the bolts in the threaded holes 24a of the thermostat casing 20 to seal the thermostat 50 in the thermostat casing 20.

The O ring 58 put on the valve body 51 is pressed against the inner circumference 25a and the semi-spherical bottom surface 25b of the thermostat chamber 25, and is held between the outer end surface 21a of the valve body 21 and the rubber seal 40. The O ring divides the space between the inner circumference 25a of the thermostat chamber 25 and the valve body 51 into the inlet part on the side of the inlet opening 52, and the outlet part on the side of the outlet opening 53, and seals the inlet and the outlet part.

Referring to Fig. 1, the coolant pumped by the water pump 5 flows into and through an internal combustion engine E, flows into and through a radiator R, and flows through the inlet coolant passage 26 of the thermostat casing 20 to the inlet opening 52 of the thermostat 50. Part of the coolant flows through the bypass passage 37a into the cylindrical space 60 of the thermostat 50.

The low-temperature coolant circulates through the cooling system in a warm-up period subsequent to the start of the internal combustion engine E. In this warm-up period, the low-temperature coolant does not heat the wax 64 of the thermostat 50 through the valve element 61 of the valve element 61 and the wax case 62. Consequently, the valve element 61 closes the inlet opening 52 and the outlet opening 53 and opens the bypass opening 54 as shown in Figs. 1 and 15.

Therefore, the coolant pumped by the water pump 5 and circulated through and warmed by the internal combustion engine E flows through a bypass passage including the bypass passage 37a, the cylindrical space 60 of the thermostat 50, and the bypass opening 54 into the water pump 5 as shown in Fig. 15. Thus, the coolant does not flow through the radiator R and circulates only through the internal combustion engine E to warm up the internal combustion engine E quickly.

Then, the temperature of the circulating coolant increases with time, the wax 64 contained in the wax case 62 of the thermostat 50 is caused to expand by heat, and the volume of the wax 64 increases, forcing on the piston 68 to urge the piston to project from the reduced tubular part 61a, and the piston 68 exerts a reaction on the valve element 61 to move the valve element 61 against the resilience of the spring 70. Consequently, the inlet opening 52 and the outlet opening 53 are opened and the bypass opening 54 is closed.

While the internal combustion engine is in its normal operation, the coolant pumped by the water pump 5 and circulated through and warmed by the internal combustion engine E flows through the radiator R, and the coolant is cooled while the same is flowing through the radiator R. The cooled coolant flows through a circulation passage including the inlet opening 52, the outlet opening 53 and the water pump 5 to cool the internal combustion engine E.

In some cases, the cooled coolant that has flowed through the radiator R leaks from outside the valve body 51 into the cylindrical space 60, and is mixed in the coolant circulating through the internal combustion engine E while the internal combustion engine E is in warm-up operation and the bypass circuit including the bypass passage 36a for circulating the coolant only through the internal combustion engine E is formed to impede the increase of the temperature of the coolant and to delay the warm up of the internal combustion engine, unless the rubber seal 40 of the thermostat 50 exercises its sealing function perfectly. In the thermostat mounting structure embodying the present invention, the annular recess of the rubber seal 40 positions the valve body 21 accurately and surely, and the rubber seal 40 exercises its high sealing function. Consequently, the leakage of the coolant flowed through the radiator R into the coolant circuit including the internal combustion engine E can be substantially perfectly prevented to avoid the extension of warming-up period.

## Claims

1. A thermostat mounting structure wherein:
a thermostat chamber (25) is provided in a casing (20) so as to extend across an inlet coolant passage (26) formed through the casing (20);
a thermostat (50) is fitted in the thermostat chamber (25) of the casing (20), said thermostat (50) including a cylindrical valve body (51) having an inlet opening (52) and an outlet opening (53) in a side wall thereof, and a valve element (61) slidably fitted in the valve body (51) to open and close the inlet opening (52) and the outlet opening (53);
a cover (30) is attached to the casing (20) so as to close the thermostat chamber (25), said cover (30) having an annular groove (34) in a joining surface thereof facing the thermostat (50); and
an annular elastic seal (40) is fitted in the annular groove (34) of the cover (30) to seal the thermostat chamber (25) and to hold the thermostat (50) fixedly in place in the thermostat chamber (25):
wherein the elastic seal (40) has an inner, corner part defined by an annular lip (42) and an annular ridge (43), and the annular lip (42) and the annular ridge (43) are pressed against an annular circumferential end portion (51a, 51c) of the valve body (51) to position the thermostat (50),
wherein the annular lip (42) of the elastic seal (40) extends radially inward from a body (41) of the elastic seal (40), and the annular ridge (43) rises toward the thermostat (50) from the inner surface of the body (41) of the elastic seal (40) facing the thermostat (50).

2. The thermostat mounting structure according to claim 1, wherein the elastic seal (40) is provided with an annular shoulder (44) having an L-shaped cross section in the inner corner part defined by the annular lip (42) and the annular ridge (43), and the annular circumferential end portion (51a,51c) of the outer end of the valve body (51) are fitted against the annular shoulder (44) to position the thermostat (50).

3. The thermostat mounting structure according to claim 2, wherein the annular ridge (43) defining the annular shoulder (44) of the elastic seal (40) has an inclined inner side surface (44a), and the outer edge of the end surface of the valve body (51) in contact with the inclined inner side surface (44a) of the annular ridge (43) is chambered in a bevel surface (51c) .

4. The thermostat mounting structure according to claim 1, wherein an axial groove (25c) is formed in the side wall of the thermostat chamber (25), an axial ridge (59) is formed on the outer circumference of the valve body (51), and the thermostat (50) is fitted in the thermostat chamber (25) with the axial ridge (59) fitted in the axial groove (25c) to position the valve body (51) with respect to a circumferential direction.

5. The thermostat mounting structure according to claim 1, wherein the thermostat chamber (25) of the casing (20) has an outer open end covered with the cover (30) and a substantially semispherical inner bottom (25c), and the cylindrical valve body (51) has an inner, bottomed cylindrical part (55) having an end seated on the semispherical inner bottom (25c) of the thermostat chamber (25).

6. The thermostat mounting structure according to claim 5, wherein the inner, bottomed cylindrical part (55) has an outside diameter smaller than that of the valve body (51), ribs (56) are formed integrally with the inner, bottomed cylindrical end part (55) so as to extend in diametrically opposite directions, and the ribs (56) are pressed against the substantially semispherical bottom (25c).

## Patentansprüche

1. Thermostatbefestigungsanordnung, wobei:
eine Thermostatkammer (25) in einem Gehäuse (20) bereitgestellt ist, um sich über ein Kühlmitteleinlassdurchgang (26) zu erstreckten, welcher durch das Gehäuse (20) ausgebildet ist;
ein Thermostat (50) in die Thermostatkammer (25) des Gehäuses (20) eingepasst ist, wobei der Thermostat (50) einen zylindrischen Ventilkörper (51) umfasst, welcher in einer Seitenwand davon eine Einlassöffnung (52) und eine Auslassöffnung (53) aufweist, und ein Ventilelement (61) gleitbar in den Ventilkörper (51) eingepasst ist, um die Einlassöffnung (52) und die Auslassöffnung (53) zu öffnen und zu schließen;
eine Abdeckung (30) an dem Gehäuse (20) angebracht ist, um die Thermostatkammer (25) zu schließen, wobei die Abdeckung (30) in einer dem Thermostat (50) zugewandten Verbindungsfläche davon eine ringförmige Nut (34) aufweist; und
eine ringförmige elastische Dichtung (40) in die ringförmige Nut (34) der Abdeckung (30) eingepasst ist, um die Thermostatkammer (25) abzudichten und um das Thermostat (50) fest in Position in der Thermostatkammer (25) zu halten:
wobei die elastische Dichtung (40) ein inneres Eckteil aufweist, welches durch eine ringförmige Lippe (42) und einen ringförmigen Grat (43) definiert ist, und die ringförmige Lippe (42) und der ringförmige Grat (43) gegen ein ringförmigen umlaufenden Endabschnitt (51a, 51 c) des Ventilkörpers (51) gedrückt werden, um den Thermostat (50) zu positionieren,
wobei sich die ringförmige Lippe (42) der elastischen Dichtung (40) radial, von einem Körper (41) der elastischen Dichtung (40) nach innen gewandt, erstreckt und der ringförmige Grat (43) ragt von der inneren Fläche des Körpers (41) der elastischen Dichtung (40), welche dem Thermostat (50) zugewandt ist, in Richtung des Thermostates (50).

2. Thermostatbefestigungsanordnung nach Anspruch 1, wobei die elastische Dichtung (40) mit einer ringförmigen Schulter (44) bereitgestellt ist, welche einen L-förmigen Querschnitt im inneren Eckteilstück aufweist, welches durch die ringförmige Lippe (42) und den ringförmigen Grat (43) definiert ist und der ringförmige umlaufende Endabschnitt (51 a, 51 c) des äußeren Endes des Ventilkörpers (51) gegen die ringförmige Schulter (44) eingepasst sind, um den Thermostat (50) zu positionieren.

3. Thermostatbefestigungsanordnung nach Anspruch 2, wobei der ringförmige Grat (43), welcher die ringförmige Schulter (44) der elastischen Dichtung (40) definiert, eine geneigte innere Seitenfläche (44a) aufweist, und die äußere Kante der Endfläche des Ventilkörpers (51), welche in Kontakt mit der geneigten inneren Seitenfläche (44a) des ringförmigen Grates (43) ist, ist in einer Kegelfläche (51 c) gekammert.

4. Thermostatbefestigungsanordnung nach Anspruch 1, wobei eine axiale Nut (25c) in der Seitenwand der Thermostatkammer (25) ausgebildet ist, ein axialer Grat (59) an dem äußeren Umfang des Ventilkörpers (51) ausgebildet ist und der Thermostat (50) in die Thermostatkammer (25) mit dem axialen Grat (59) eingepasst ist, welcher in die axiale Nut (25c) eingefügt ist, um den Ventilkörper (51) in Bezug auf eine Umfangsrichtung zu positionieren.

5. Thermostatbefestigungsanordnung nach Anspruch 1, wobei die Thermostatkammer (25) des Gehäuses (20) ein äußeres offenes Ende, welches mit der Abdeckung (30) bedeckt ist, und einen im Wesentlichen halbkugelförmigen inneren Boden (25c) aufweist, und der zylindrische Ventilkörper (51) weist ein inneres, zylindrisches mit Boden versehenes Teil (55) auf, welches ein an dem halbkugelförmigen inneren Boden (25c) der Thermostatkammer (25) sitzendes Ende aufweist.

6. Thermostatbefestigungsanordnung nach Anspruch 5, wobei der innere, mit Boden versehene zylindrische Teil (55) einen Außendurchmesser aufweist, welcher kleiner ist als derjenige des Ventilkörpers (51), Rippen (56) sind zusammenhängend mit dem inneren, mit Boden versehenen zylindrischen Endteil (55) ausgebildet, um sich in diametral entgegengesetzte Richtungen zu erstrecken und die Rippen (56) gegen den im Wesentlichen halbkugelförmigen Boden (25c) gedrückt sind.

## Revendications

1. Structure de montage de thermostat dans laquelle :
une chambre de thermostat (25) est agencée dans un boîtier (20) afin de s'étendre d'un côté à l'autre d'un passage de fluide de refroidissement d'admission (26) formé à travers le boîtier (20) ;
un thermostat (50) est agencé dans la chambre de thermostat (25) du boîtier (20), ledit thermostat (50) comprenant un corps de soupape cylindrique (51) ayant une ouverture d'admission (52) et une ouverture de refoulement (53) dans une de ses parois latérales, et un élément de soupape (61) ajusté avec faculté de glissement dans le corps de soupape (51) afin d'ouvrir et de fermer l'ouverture d'admission (52) et l'ouverture de refoulement (53) ;
un couvercle (30) est fixé au boîtier (20) afin de fermer la chambre de thermostat (25), ledit couvercle (30) ayant une rainure annulaire (34) dans une de ses surfaces de jonction faisant face au thermostat (50) ; et
un élément d'étanchéité élastique annulaire (40) est ajusté dans la rainure annulaire (34) du couvercle (30) afin d'étancher la chambre de thermostat (25) et de maintenir le thermostat (50) en place de façon fixe dans la chambre de thermostat (25) :
dans laquelle l'élément d'étanchéité élastique (40) comprend une partie de coin interne définie par une lèvre annulaire (42) et une arête annulaire (43), et la lèvre annulaire (42) et l'arête annulaire (43) sont pressés contre une portion d'extrémité circonférentielle annulaire (51a, 51c) du corps de soupape (51) afin de positionner le thermostat (50),
dans laquelle la lèvre annulaire (42) de l'élément d'étanchéité élastique (40) s'étend radialement vers l'intérieur depuis un corps (41) de l'élément d'étanchéité élastique (40), et l'arête annulaire (43) s'élève vers le thermostat (50) depuis la surface interne du corps (41) de l'élément d'étanchéité élastique (40) faisant face au thermostat (50).

2. Structure de montage de thermostat selon la revendication 1, dans lequel l'élément d'étanchéité élastique (40) est doté d'un épaulement annulaire (44) ayant une section en forme de L dans la patrie de coin interne définie par la lèvre annulaire (42) et l'arête annulaire (43), et la portion d'extrémité circonférentielle annulaire (51a, 51c) de l'extrémité extérieure du corps de soupape (51) est ajustée contre l'épaulement annulaire (44) afin de positionner le thermostat (50).

3. Structure de montage de thermostat selon la revendication 2, dans laquelle l'arête annulaire (43) définissant l'épaulement annulaire (44) de l'élément d'étanchéité élastique (40) a une surface latérale interne inclinée (44a), et le bord externe de la surface d'extrémité du corps de soupape (51) en contact avec la surface latérale interne inclinée (44a) de la arête annulaire (43) est chanfreiné en une surface en biseau (51c).

4. Structure de montage de thermostat selon la revendication 1, dans laquelle une rainure axiale (25c) est formée dans la paroi latérale de la chambre de thermostat (25), une arête axiale (59) est formée sur la circonférence externe du corps de soupape (51) et le thermostat (50) est ajusté dans la chambre de thermostat (25) avec l'arête axiale (59) ajustée dans la rainure axiale (25c) afin de positionner le corps de soupape (51) par rapport à une direction circonférentielle.

5. Structure de montage de thermostat selon la revendication 1, dans laquelle la chambre de thermostat (25) du boîtier (20) comporte une extrémité ouverte externe recouverte par le couvercle (30) et un fond interne sensiblement semi-sphérique (25c), et le corps de soupape cylindrique (51) comporte une partie cylindrique à fond interne (55) ayant une extrémité assise sur le fond interne semi-sphérique (25c) de la chambre de thermostat (25).

6. Structure de montage de thermostat selon la revendication 5, dans laquelle la partie cylindrique à fond interne (55) a un diamètre externe plus petit que celui du corps de soupape (51), des nervures (56) sont formées d'un seul tenant avec la partie d'extrémité cylindrique à fond interne (55) afin de s'étendre dans des directions diamétralement opposées, et les nervures (56) sont pressés contre le fond sensiblement semi-sphérique (25c).
